# FASCICULE DE BREVET EUROPEEN

(11) **EP 2 110 638 B1**
(45) Date de publication et mention de la délivrance du brevet: **14.08.2013**
(21) Numéro de dépôt: 09156025.0
(22) Date de dépôt: 24.03.2009
(51) Int. Cl.: G01B 5/00

(54) **Dispositif de contrôle tridimensionnel de la géométrie d'un élément de carrosserie de véhicule automobile**
3D-Kontrollvorrichtung der Geometrie eines Karosserieelements eines Kraftfahrzeugs
Device for three-dimensional testing of the geometry of an automobile body element

(30) Priorité: 14.04.2008 FR 0852475
(43) Date de publication de la demande: 21.10.2009
(73) Titulaire: PEUGEOT CITROËN AUTOMOBILES S.A., 78140 Vélizy Villacoublay (FR)
(72) Inventeur: Tilly, Laurent, 91130, RIS ORANGIS (FR)
(74) Mandataire: Allain, Laurent

(56) Documents cités:
- FR-A- 2 737 562
- US-B1- 6 267 341

## Description

La présente invention concerne un dispositif de contrôle tridimensionnel de la géométrie d'un élément de carrosserie de véhicule automobile conçu pour être monté mobile entre des positions d'ouverture et de fermeture par l'intermédiaire d'au moins une pièce d'articulation, ce dispositif comprenant des moyens de réception de cet élément de carrosserie dans une position correspondant à sa position de fermeture et des moyens de mesure de la position alors occupée par au moins un point de l'élément de carrosserie. La présente invention est aussi relative à un procédé de mise en oeuvre de ce dispositif.

La carrosserie d'un véhicule automobile comporte classiquement des éléments mobiles entre des positions d'ouverture et de fermeture tels que le capot du compartiment moteur, les portières de l'habitacle ou encore un hayon arrière ou un toit ouvrant par exemple. Pour des raisons d'ordre technique aussi bien qu'esthétique, un tel élément doit s'intégrer avec précision à la carrosserie du véhicule, ce qui suppose un contrôle strict des jeux et affleurements au niveau des contours complémentaires de l'élément et de celui d'une ouverture de la carrosserie sur lequel il s'appuie en position de fermeture. Ce contrôle exige notamment celui de la géométrie de l'élément de fermeture lui-même, dans sa position de fermeture, ceci de manière continue en particulier dans le cadre de fabrication de grand volume comme c'est le plus souvent le cas dans l'industrie automobile.

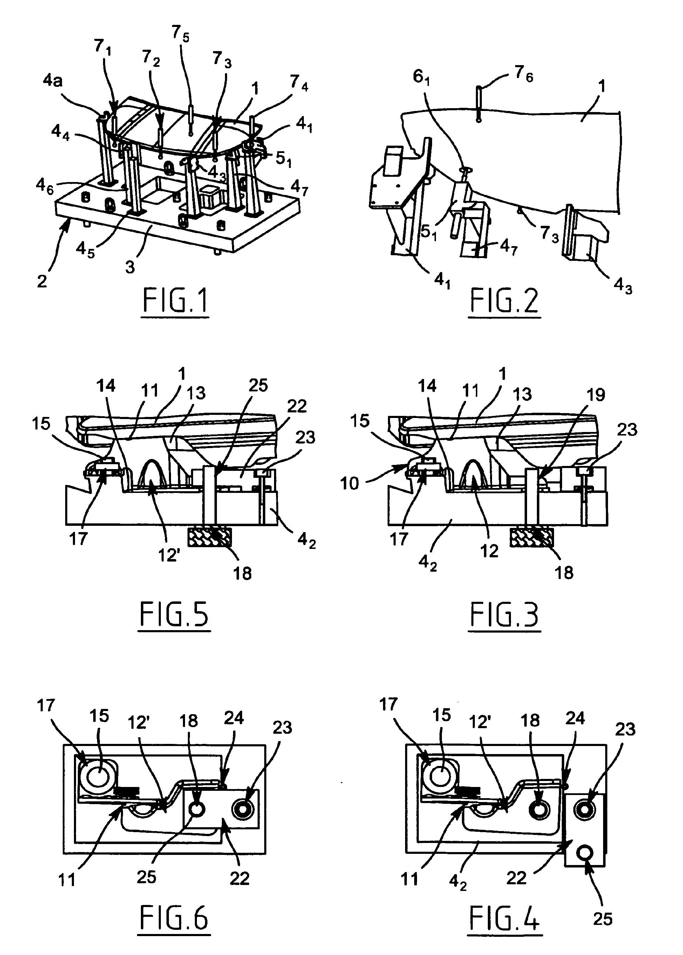

Les figures 1 et 2 du dessin annexé illustrent une procédure connue adaptée au contrôle de la géométrie d'un capot de compartiment moteur auquel la présente invention s'adresse plus particulièrement, mais non exclusivement comme on le verra dans la suite de la présente description. Suivant cette procédure on dépose le capot 1 sur un dispositif de contrôle 2, ou berceau, constitué par exemple d'une base 3 sur laquelle sont fixés des montants verticaux 4ᵢ définissant à leur extrémité supérieure des appuis sur lesquels le capot assemblé, donc muni de sa doublure, vient reposer par gravité.

Les points d'appui sont géométriquement disposés les uns par rapport aux autres comme ceux sur lesquels repose le capot 1 lorsqu'il est monté sur la carrosserie d'un véhicule, c'est-à-dire aux points de contact de deux pièces d'articulation du capot, telles que des charnières, avec la doublure de ce capot et aux points de contact de deux butées d'appui du capot avec cette doublure, situées à l'avant de la carrosserie. Ces paires de charnières et de butées sont classiquement disposées symétriquement par rapport au plan de symétrie médian de la carrosserie du véhicule.

C'est ainsi que les montants 4₁, 4₂ supportent des appuis en zone de charnière et les montants 4₃, 4₄ des appuis en zone de butée, comme illustré sur la figure 2 qui fait apparaître la face inférieure du capot 1. Un cinquième montant 4₅, visible sur la figure 1, porte une butée latérale pour le capot.

D'autres montants 4₆, 4₇ supportent des moyens d'indexation 5₁, 5₂, respectivement, ou pilotes, qui servent à indexer et immobiliser le capot 2 lors de sa mise en place sur le support de contrôle 2. Sur la figure 2 on voit que le pilote 5₁ passe à cet effet dans une dépression 6₁ formée dans la doublure du capot 1, avantageusement par deux trous alignés, l'un circulaire et l'autre oblong.

Des palpeurs 7ᵢ (voir figure 1) permettent de mesurer la position de points prédéterminés du contour et de la surface du capot et ainsi de contrôler la géométrie de ce capot dans des conditions très proches de celles qui prévalent quand ce capot est monté sur une carrosserie. Les mesures ainsi réalisées peuvent être comparées à d'autres, réalisées directement sur un capot monté sur une carrosserie, dans le cadre d'une procédure de contrôle adaptée à un contrôle continu sur chaîne de montage de véhicules, par exemple. Les résultats des mesures réalisées doivent alors être proches et les différences éventuelles contenues dans des tolérances prédéterminées.

Une telle procédure n'est cependant pas sans inconvénient. En effet les mesures opérées sur un capot monté sur une carrosserie, ou caisse, de véhicule ne sont pas parfaitement comparables à celles réalisée sur un capot nu, du fait que ce dernier est alors dépourvu de ses charnières d'articulation sur la caisse. Les tolérances de fabrication affectant la géométrie de ces dernières peuvent alors fausser les comparaisons, et donc gêner la corrélation, entre les mesures réalisées sur chaîne de montage et celles réalisées sur berceau.

La présente invention a notamment pour but de lever cet inconvénient.

On atteint ce but de l'invention, ainsi que d'autres qui apparaîtront à la lecture de la description qui va suivre, avec un dispositif de contrôle tridimensionnel adapté à un élément de carrosserie du type décrit en préambule de la présente revendication 1, conformément à l'enseignement de US-B-6 267 341, ce dispositif étant remarquable en ce que des moyens de fixation comprennent un organe de fixation comportant un axe fileté débordant d'une surface d'appui pour passer dans un trou percé dans une patte du charnon fixe quand ce dernier est mis en place sur les moyens de réception avec un élément de carrosserie auquel il a été préalablement assemblé, les moyens de fixation comprenant un écrou vissé sur l'axe fileté pour serrer cette patte sur la surface d'appui.

Comme on le verra en plus détail dans la suite, un tel dispositif permet notamment d'améliorer la simulation de la position de l'élément de carrosserie à contrôler, de contrôler l'influence sur la géométrie de cet l'élément, monté sur caisse, de pièces d'articulation de série par rapport à celles de charnières de référence et, plus généralement, d'améliorer la réactivité des contrôles ainsi opérés sur une chaîne de montage de véhicules automobiles.

Selon d'autres caractéristiques de la présente invention :
- les moyens de fixation comprennent un deuxième organe de fixation, les deux organes étant disposés de part et d'autre de l'axe de la charnière, le deuxième organe de fixation traversant une semelle du charnon fixe pour le serrer contre la surface d'appui,
- le deuxième organe de fixation coopère avec un filetage formé dans la semelle du charnon fixe d'une charnière de référence,
- le dispositif comprend une bride mobile entre une position inactive et une position active pour être amenée dans sa position inactive ou dans sa position active quand la surface d'appui reçoit une charnière de référence ou une charnière de série, respectivement, cette bride coopérant avec le deuxième organe de fixation pour serrer le charnon fixe d'une charnière de série contre la surface d'appui,

Suivant l'invention, ce dispositif est utilisable, notamment, pour le contrôle tridimensionnel d'un élément de carrosserie tel qu'un capot du compartiment moteur, une portière d'habitacle de véhicule automobile, un hayon arrière ou un toit ouvrant d'un tel véhicule.

L'invention est encore relative à un procédé de mise en oeuvre de ce dispositif, remarquable par les étapes suivantes :
a) on fixe la pièce d'articulation, de référence ou de série, sur l'élément de carrosserie,
b) on dépose l'élément ainsi équipé sur le dispositif de contrôle,
c) on fixe l'élément de carrosserie sur les moyens de réception du dispositif de contrôle, et
d) on procède à la mesure de la position d'au moins un point de l'élément.

Selon d'autres caractéristiques de ce procédé :
- les fixations de la pièce d'articulation sur l'élément de carrosserie puis sur les moyens de réception du dispositif de contrôle se font sous des efforts de serrage prédéterminés,
- on procède aux mesures sur un élément de carrosserie équipé soit d'au moins une pièce d'articulation de référence, soit d'au moins une pièce d'articulation de série, et on compare les résultats des mesures pour évaluer l'influence de la substitution d'une pièce d'un type à une pièce de l'autre type,
- on procède aussi à des contrôles tridimensionnels de la géométrie d'un élément de carrosserie monté sur un véhicule automobile au moyen d'une pièce d'articulation de série ou d'une pièce d'articulation de référence, pour établir des mesures de comparaison.

D'autres caractéristiques et avantages de la présente invention apparaîtront à la lecture de la description qui va suivre et à l'examen du dessin annexé dans lequel :
- les figures 1 et 2 sont des vues perspectives d'un dispositif de contrôle tridimensionnel de la technique antérieure, décrit en préambule de la présente description,
- les figures 3 et 4 sont des vues schématiques partielles, en élévation et en plan respectivement, d'un capot équipé de charnières de référence (capot enlevé sur la figure 4, pour la clarté de cette figure), le tout étant monté sur le dispositif de contrôle tridimensionnel suivant la présente invention, et
- les figures 5 et 6 sont des vues analogues aux figures 3 et 4 respectivement, les charnières de référence étant remplacées par des charnières de série.

On va décrire l'invention dans son application au contrôle tridimensionnel d'un capot de compartiment moteur de véhicule automobile, ceci à titre illustratif et non limitatif seulement. En effet l'invention est susceptible d'application, notamment, à d'autres types d'éléments de carrosserie mobiles entre des positions d'ouverture et de fermeture, comme on le verra plus loin.

Le dispositif suivant l'invention prend généralement la forme de celui représenté aux figures 1 et 2, dont il se distingue cependant par l'équipement des extrémités supérieures des montants 4₁ et 4₂, sur lesquels s'appliquent les zones de réception des charnières du capot 1 dans le dispositif de la technique antérieure décrit ci-dessus.

Suivant une caractéristique de la présente invention ces extrémités supérieures sont conçues pour recevoir aussi bien un capot 1 muni de charnières dites métrologiques ou théoriques ou encore, dans la suite, « de référence » que de charnières dites « de série » car fabriquées pour alimenter une chaîne de montage de véhicules automobiles.

Selon une autre caractéristique importante de la présente invention, dont l'intérêt apparaîtra dans la suite, il n'est alors pas nécessaire de démonter des pièces du dispositif de contrôle, telles que les montants 4₁ et 4₂ par exemple, pour adapter ce dernier à la réception d'un capot muni de charnières de l'un ou l'autre des deux types précités.

En effet un but de l'invention est de procéder au contrôle de la géométrie d'un capot issu d'une fabrication en série par exemple, dans des conditions qui reproduisent au mieux les conditions d'accueil et de montage de ce capot sur un véhicule en cours d'assemblage.

C'est pourquoi le procédé de contrôle suivant l'invention fait intervenir l'influence des charnières sur la géométrie du capot, contrairement au procédé de mesure de la technique antérieure décrit en préambule de la présente description.

C'est pourquoi aussi les mesures s'opèrent aussi bien sur des capots équipés de charnières de référence, dont la géométrie et les dimensions sont donc parfaitement connues, que sur des capots équipés de charnières de série. La comparaison des mesures effectuées permet de détecter rapidement d'éventuelles dérives de la géométrie tant des capots que des charnières de série et donc d'intervenir plus rapidement sur la chaîne de montage des véhicules pour corriger les défauts relevés.

L'utilisation de deux types de charnières dans les mesures à réaliser ne doit pas perturber la géométrie du dispositif de contrôle, ce qui serait le cas si le passage d'un type de charnière à l'autre exigeait, par exemple, un changement des montants 4₁, 4₂. En effet un tel changement introduirait des variations de la géométrie du dispositif de contrôle préjudiciables à la précision et donc à la pertinence des mesures réalisées.

On va maintenant décrire la structure de la partie supérieure des montants 4₁,4₂ qui permet d'atteindre les buts énoncés ci-dessus. Sur les figures 3 et 4 on a représenté schématiquement une charnière de référence 10 fixée sur un capot 1, l'ensemble étant monté sur des moyens de réception disposés à l'extrémité supérieure du montant 4₂, par exemple.

Suivant la présente invention, c'est ainsi que l'on monte le capot 1 sur le dispositif de contrôle, au moyen de deux charnières et non d'une seule comme on l'a vu en liaison avec la description des figures 1 et 2, avant de procéder aux mesures permettant de relever ses caractéristiques tridimensionnelles aux fins de comparer celles-ci à celles d'un modèle de référence de ce capot. Ces mesures et comparaisons permettent, comme on le verra plus loin, de prévenir une éventuelle dérive des caractéristiques de jeux et affleurements des capots sur une chaîne de montage de véhicules automobiles ou, tout au moins, de remédier rapidement à l'apparition d'une telle dérive.

La charnière de référence 10 comprend un axe 11 autour duquel s'articule un charnon fixe 12 et un charnon mobile 13. Le charnon fixe 12 repose sur une surface d'appui 14 formant partie des moyens de réception disposés en haut du montant 4₂. Cette surface est ici en forme de marche, conforme à celle de la face inférieure du charnon fixe 12 qui repose sur elle.

Les moyens de réception de la charnière 10 comprennent en outre des moyens de fixation de cette charnière sur sa surface d'appui. C'est ainsi q'un axe fileté 15 déborde de la surface d'appui 14 pour passer dans un trou percé dans une patte 16 du charnon fixe 12 et coopérer avec un écrou 17 pour serrer le charnon sur sa surface d'appui. Ces moyens de fixation comprennent en outre une vis 18 qui passe dans un trou fileté 19 creusé dans la base du charnon 12 pour serrer également celui-ci contre la surface d'appui 14. Les axes géométriques, parallèles, de l'axe fileté 15 et de la vis 18 sont situés de part et d'autre de celui de l'axe de la charnière, pour renforcer la stabilité de l'ancrage de celle-ci sur la surface d'appui 14.

La charnière de référence est une pièce mécanique dont les dimensions sont connues. Elle n'est pas nécessairement identique en tous points à une charnière de série, aux tolérances de fabrication près de cette dernière. Cependant, pour que les comparaisons à réaliser entre les mesures effectuées avec l'une et l'autre soient significatives, la charnière de référence doit être identique à la charnière de série au moins sur les points suivants :
- position des moyens de fixation sur un capot et sur une caisse de véhicule,
- positions d'éventuels index de positionnement sur les charnons fixe et mobile,
- position de l'axe de la charnière,
- formes et positions des surfaces de contact ou d'accostage du charnon fixe sur la caisse et du charnon mobile sur le capot.

En outre la charnière de référence doit pouvoir être montée sur une caisse de véhicule, comme on le verra plus loin.

On a représenté aux figures 5 et 6 du dessin annexé une charnière de série 20 montée sur un capot 1 de véhicule et installée sur la surface d'appui 14 du montant 4₂ en lieu et place de la charnière de référence. Les formes des charnières de série et de référence représentées au dessin sont généralement semblables mais se distinguent néanmoins, tout en respectant les contraintes énoncées ci-dessus, notamment aux niveaux des traversées des charnons fixes 12,12' de ces charnières 10, 20 respectivement, par la vis de fixation 18.

En raison d'impératifs techniques liés au montage sur chaîne des charnières de série selon le mode de réalisation représenté, la fixation de celles-ci sur leurs surfaces d'accostage prévues sur la carrosserie d'un véhicule ne peut s'opérer par simple vissage de cette vis 18, contrairement à la charnière de référence. Comme cela est visible sur la figure 5, la vis 18 traverse librement un trou 21 de plus fort diamètre percé dans la semelle du charnon fixe 12' de la charnière de série 20 pour la mise en place d'un organe de fixation adapté lors du montage du capot sur chaîne. Cette vis ne peut donc assurer le rôle qu'elle joue dans la fixation de la charnière de référence sur le montant 4₂.

Suivant l'invention, comme représenté aux figures 5 et 6, la fixation d'une charnière de série 20 sur ce montant s'opère d'une part au moyen de l'axe fileté 15 et de l'écrou 17, d'une manière identique à celle appliquée pour la charnière de référence 10 et, d'autre part, avec la vis 18 passant dans un trou fileté 25 complémentaire formé dans une bride pivotante 22 alors rabattue sur la semelle du charnon fixe 12' de la charnière de série 20. Cette semelle est alors fixée par serrage entre la surface d'appui 14 et la bride 22. Le trou fileté 25 joue alors le rôle du trou fileté 19 percé dans la semelle du charnon fixe 12 de la charnière de référence.

La bride 22 est montée pivotante sur cette surface d'appui autour de l'axe d'une vis 23. Lors de l'installation de la charnière de référence elle reste écartée de celle-ci (voir figure 4), dans une position inactive. Lors de l'installation d'une charnière de série, on la fait pivoter d'un quart de tour pour qu'elle vienne couvrir la partie de la semelle du charnon fixe dans laquelle est percé le trou 21. Une butée 24 arrête la bride dans cette position. On passe ensuite la vis de fixation 18 dans ce trou et dans le trou fileté 25 formé dans la bride 22. Le serrage de la vis assure la fixation de la charnière 20 à ce niveau.

On va maintenant décrire un procédé de mise en oeuvre du dispositif suivant l'invention permettant de réaliser les contrôles souhaités. Dans un premier temps on fixe une paire de charnières, de série ou de référence, sur un capot, par serrage de vis (non représentées au dessin) traversant le charnon mobile de chaque charnière. Pour que l'effort de serrage n'influe pas sur les mesures à réaliser ultérieurement, celui-ci est défini par une valeur prédéterminée du couple de serrage à appliquer alors aux vis de fixation.

On dépose ensuite manuellement le capot ainsi équipé sur ses appuis prévus dans le support de contrôle, c'est-à-dire sur les montants 4₁, 4₂ (voir figures 1 et 2) équipés comme décrits ci-dessus, sur les montants 4₃,4₄ et contre des butées latérales telles que, par exemple, celle portée par le montant 4₅, le tout avec guidage par les index 5₁,5₂. Les axes filetés 15 sont alors passés dans les trous percés dans les pattes 16 des deux charnons fixes 12 ou 12'.

On passe alors les écrous 17 sur ces axes filetés 15 et on les serre avec un couple de serrage prédéterminé pour la raison donnée ci-dessus.

Ensuite, dans le cas de charnières de référence, on installe et on serre, avec un couple prédéterminé, la vis de fixation 18 qui traverse le trou fileté 19 percé dans la semelle du charnon 12.

Dans le cas de charnières de série, on amène les brides tournantes 22 dans la position représentée aux figures 5 et 6, on passe les vis de fixation 18 dans ces brides et on les serre avec un couple prédéterminé.

Il est alors possible de procéder, à l'aide des palpeurs 7ᵢ (voir figures 1 et 2) aux mesures nécessaires pour contrôler les caractéristiques de la géométrie du capot afin de s'assurer que, sur une chaîne de montage de véhicules, les tolérances fixées en ce qui concerne les jeux et affleurements du capot sont respectées. Il est clair que, conformément à un but de l'invention annoncé plus haut, l'introduction des charnières d'articulation sur le capot qui fait l'objet de ces mesures permet de tenir compte de l'influence d'éventuelles dérives des caractéristiques dimensionnelles de ces charnières dans les mesures à réaliser, ce qui n'est pas possible avec le dispositif de contrôle de la technique antérieure décrit en préambule de la présente description.

Les résultats des mesures permettent de connaître les caractéristiques géométriques du capot. Ces caractéristiques peuvent être comparées à celles déduites de mesures faites sur caisse de véhicule, avec charnières de série. Elles doivent être proches.

L'interface unique de montage des charnières de série comme de référence sur le dispositif de contrôle permet d'éviter le démontage de celui-ci lors d'un changement de type de charnières. La stabilité de la géométrie du support de contrôle en est renforcée. Accessoirement, les éléments de ce dispositif ne peuvent alors être égarés.

Dans le processus de mesure, la gamme opératoire de dépose et de fixation du capot est identique à la gamme d'assemblage du capot sur caisse de véhicule, sur une chaîne de montage de véhicules. Les manipulations du capot lors de son installation sur le support sont limitées. La représentativité de cette gamme opératoire est ainsi assurée, de même que celle de la position occupée par le capot sur le support de contrôle par rapport à celle du capot sur caisse.

Comme on l'a vu plus haut, l'invention permet d'évaluer l'influence des charnières de série sur le montage du capot, par rapport à celles des charnières de référence utilisées en routine lors des contrôles.

Toutes ces capacités du procédé et du dispositif de contrôle suivant l'invention assurent une réactivité plus rapide et précise de ce contrôle sur l'activité d'une ligne ou chaîne de montage de véhicules, des défauts éventuels étant détectés plus tôt, dès avant l'arrivée des pièces contrôlées sur cette ligne.

Bien entendu, l'invention n'est pas limitée au mode de réalisation décrit et représenté, qui n'a été donné qu'à titre d'exemple. C'est ainsi que les géométries des charnons fixes des charnières de série et de référence pourraient être encore plus proches, pour simplifier l'interface de fixation et supprimer, par exemple la bride tournante, dans la mesure ou cela serait compatible avec des impératifs de production sur chaîne.

De même, l'invention n'est pas limitée au contrôle de la géométrie d'un capot de moteur et s'étend évidemment au contrôle d'autres éléments de carrosserie articulés tels que portière d'habitacle, hayon arrière, toit ouvrant, voire à des éléments de fermeture de carrosserie de véhicules autres qu'automobiles, voire encore à des enveloppes d'objets, appareils, etc....comportant de tels éléments de fermeture.

## Revendications

1. Dispositif de contrôle tridimensionnel de la géométrie d'un élément de carrosserie (1) de véhicule automobile, conçu pour être monté mobile entre des positions d'ouverture et de fermeture par l'intermédiaire d'au moins une pièce d'articulation (10 ; 20), ledit dispositif comprenant des moyens de réception (4₂) dudit élément de carrosserie dans une position correspondant à ladite position de fermeture et des moyens de mesure (7ᵢ) de la position alors occupée par au moins un point dudit élément (1), lesdits moyens de réception (4₂) comprenant des moyens de fixation de ladite pièce d'articulation (10 ;20), préassemblée audit élément de carrosserie (1), ces moyens de réception (4₂) étant conçus pour recevoir indifféremment, dans les mêmes conditions, une pièce d'articulation de série (20) ou une pièce d'articulation de référence (10), ledit dispositif étant adapté à une pièce d'articulation de série (20) ou de référence (10) en forme de charnière comportant un charnon fixe (12 ;12') et un charnon mobile (13) avec ledit élément (1) de carrosserie mobile, lesdits moyens de réception (4₂) comprenant une surface d'appui (14) conformée pour recevoir indifféremment une surface complémentaire dudit charnon fixe (12' ;12) d'une charnière de série (20) ou d'une charnière de référence(10), conformée comme la surface qui reçoit ledit charnon fixe (12') sur un véhicule de série, **caractérisé en ce que** lesdits moyens de fixation comprennent un organe de fixation comportant un axe fileté (15) débordant de ladite surface d'appui (14) pour passer dans un trou percé dans une patte (16) dudit charnon fixe (12 ;12') quand ce dernier est mis en place sur lesdits moyens de réception avec ledit élément de carrosserie (1) auquel il a été préalablement assemblé, lesdits moyens de fixation comprenant un écrou (17) vissé sur ledit axe fileté (15) pour serrer ladite patte (16) sur ladite surface d'appui (14).

2. Dispositif conforme à la revendication 1, **caractérisé en ce que** lesdits moyens de fixation comprennent un deuxième organe de fixation (18), les deux organes étant disposés de part et d'autre de l'axe (11) de ladite charnière, ledit deuxième organe de fixation (18) traversant une semelle dudit charnon fixe (12 ;12') pour le serrer contre ladite surface d'appui (14).

3. Dispositif conforme à la revendication 2, **caractérisé en ce que** ledit deuxième organe de fixation coopère avec un trou fileté (19) formé dans ladite semelle dudit charnon fixe (12) d'une charnière de référence (10).

4. Dispositif conforme à la revendication 3, **caractérisé en ce qu'**il comprend une bride (22) mobile entre une position inactive et une position active pour être amenée dans sa position inactive ou dans sa position active quand ladite surface d'appui (14) reçoit une charnière de référence (10) ou une charnière de série (20), respectivement, ladite bride (22) coopérant avec ledit deuxième organe de fixation (18) pour serrer ledit charnon fixe (12') de ladite charnière de série (20) contre ladite surface d'appui (14).

5. Utilisation du dispositif conforme à l'une quelconque des revendications précédentes pour le contrôle tridimensionnel d'un élément de carrosserie du groupe constitué par : un capot du compartiment moteur, une portière d'habitacle de véhicule automobile, un hayon arrière ou un toit ouvrant d'un tel véhicule.

6. Procédé de mise en oeuvre du dispositif conforme à l'une quelconque des revendications 1 à 4, **caractérisé par** les étapes suivantes :
a) on fixe ladite pièce d'articulation, référence (10) ou de série (20), sur ledit élément de carrosserie (1),
b) on dépose ledit élément (1) ainsi équipé sur ledit dispositif de contrôle,
c) on fixe ledit élément de carrosserie (1) sur lesdits moyens de réception (4₂) dudit dispositif de contrôle, et
d) on procède à ladite mesure de la position d'au moins un point dudit élément (1).

7. Procédé conforme à la revendication 6, **caractérisé en ce que** les fixations de ladite pièce d'articulation (10 ; 20) sur ledit élément de carrosserie (1) puis sur lesdits moyens de réception (4₂) dudit dispositif de contrôle se font sous des efforts de serrage prédéterminés.

8. Procédé conforme à l'une quelconque des revendications 6 ou 7, **caractérisé en ce qu'**on procède auxdites mesures sur un élément de carrosserie (1) équipé soit d'une pièce d'articulation de référence (10), soit d'une pièce d'articulation de série (20), et on compare les résultats des mesures pour évaluer l'influence de la substitution d'une pièce d'un type à une pièce de l'autre type.

9. Procédé conforme à la revendication 8, **caractérisé en ce qu'**on procède aussi à des contrôles tridimensionnels de la géométrie d'un élément de carrosserie (1) monté sur un véhicule automobile au moyen d'au moins une pièce d'articulation de série (20) ou d'au moins une pièce d'articulation de référence (10) pour établir des mesures de comparaison.

## Patentansprüche

1. Vorrichtung zur dreidimensionalen Prüfung der Geometrie eines Karosseriebauteils (1) eines Fahrzeugs, die entwickelt wurde, um anhand zumindest eines Gelenkes (10; 20) beweglich zwischen einer geöffneten und geschlossenen Stellung montiert zu werden, wobei die besagte Vorrichtung Mittel zur Aufnahme (4₂) des besagten Karosseriebauteils in einer Stellung enthält, die der besagten geschlossenen Stellung entspricht, sowie Mittel zum Messen (7ᵢ) der Stellung, die dabei von zumindest einem Punkt des besagten Bauteils (1) eingenommen wird, wobei die besagten Aufnahmemittel (4₂) Vorrichtungen zum Befestigen des besagten Gelenks (10; 20) umfassen, das auf dem besagten Karosseriebauteil (1) vormontiert ist, und diese Aufnahmemittel (4₂) derart gestaltet sind, um unterschiedslos und unter denselben Bedingungen ein Serien-Gelenk (20) oder ein Referenz-Gelenk (10) aufzunehmen, und die besagte Vorrichtung einem Serien-Gelenk (20) oder einem Referenz-Gelenk (10) in Form eines Scharniergelenks mit einem festen Teil (12; 12`) und einem beweglichen Teil (13) mit dem besagten mobilen Karosseriebauteil (1) angepasst ist, und die besagten Aufnahmemittel (4₂) eine Auflagefläche (14) umfassen, die derart ausgeformt ist, um unterschiedslos eine ergänzende Fläche des besagten festen Teils (12'; 12) eines Serien-Scharniers (20) oder eines Referenz-Scharniers (10) aufzunehmen, die wie die Fläche ausgeformt ist, die den besagten festen Teil (12') des Scharniers auf einem Serienfahrzeug aufnimmt, **dadurch gekennzeichnet, dass** die besagten Befestigungsvorrichtungen ein Befestigungsorgan mit einer Gewindeachse (15) umfassen, das aus der besagten Auflagefläche (14) übersteht, um in eine Bohrung eingeführt zu werden, die in eine Lasche (16) des besagen festen Teils (12; 12`) des Scharniers gebohrt ist, wenn letzteres mit dem besagten Karosseriebauteil (1), mit dem es zuvor zusammengesetzt worden ist, an den besagten Aufnahmevorrichtungen angebracht wird, und die besagten Befestigungsvorrichtungen eine Mutter (17) umfassen, die auf die besagte Gewindeachse (15) geschraubt wird, um die besagte Lasche (16) auf der besagten Auflagefläche (14) festzuziehen.

2. Vorrichtung nach Anspruch 1, **dadurch gekennzeichnet, dass** die besagten Befestigungsmittel ein zweites Befestigungsorgan (18) umfassen, wobei die beiden Organe beiderseits der Achse (11) des besagten Scharniers angeordnet sind, und das besagte zweite Befestigungsorgan (18) durch einen Sockel des besagten festen Teils (12; 12') des Scharniers führt, um es auf der besagten Auflagefläche (14) einzuspannen.

3. Vorrichtung nach Anspruch 2, **dadurch gekennzeichnet, dass** das besagte zweite Befestigungsorgan mit einer Gewindebohrung (19) zusammenwirkt, die in den besagten Sockel des besagten festen Teils (12) eines Referenz-Scharniers (10) eingearbeitet ist.

4. Vorrichtung nach Anspruch 3, **dadurch gekennzeichnet, dass** sie einen Spannriegel (22) umfasst, der zwischen einer inaktiven und einer aktiven Stellung bewegt werden kann, um in seine inaktive oder seine aktive Stellung gebracht zu werden, wenn die besagte Auflagefläche (14) jeweils ein Referenz-Scharnier (10) oder ein Serien-Scharnier (20) aufnimmt, wobei der besagte Spannriegel (22) mit dem besagten zweiten Befestigungsorgan (18) zusammenwirkt, um den besagten festen Teil (12') des besagten Serien-Scharniers (20) auf der besagten Auflagefläche (14) einzuspannen.

5. Verwendung der Vorrichtung nach irgendeinem der vorherigen Ansprüche zur dreidimensionalen Prüfung eines Karosseriebauteils aus der Gruppe bestehend aus: einer Haube des Motorraumes, einer Türe der Fahrgastzelle eines Kraftfahrzeugs, einer Heckklappe oder einem Schiebedach eines solchen Fahrzeugs.

6. Verfahren zur Anwendung der Vorrichtung nach irgendeinem der Ansprüche 1 bis 4, das durch die folgenden Schritte gekennzeichnet ist:
a) man befestigt das besagte Referenz-Gelenk (10) oder Serien-Gelenk (20) auf dem besagen Karosseriebauteil (1),
b) man legt das besagte und derart bestückte Bauteil (1) auf der besagten Prüfvorrichtung ab,
c) man befestigt das besagte Karosseriebauteil (1) auf den besagten Aufnahmemitteln (4₂) der besagten Prüfvorrichtung, und
d) man nimmt die besagte Messung der Position zumindest eines Punktes des besagten Bauteils (1) vor.

7. Verfahren nach Anspruch 6, **dadurch gekennzeichnet, dass** die Befestigungen des besagten Gelenks (10; 20) auf dem besagten Karosseriebauteil (1) und danach auf den besagten Aufnahmemitteln (4₂) der besagten Prüfvorrichtung mit vorbestimmten Anzugskräften erfolgen.

8. Verfahren nach irgendeinem der Ansprüche 6 oder 7, **dadurch gekennzeichnet, dass** die besagten Messungen an einem Karosseriebauteil (1) vorgenommen werden, das entweder mit einem Referenz-Gelenk (10) oder mit einem Serien-Gelenk (20) ausgestattet ist, und man die Messergebnisse vergleicht, um den Einfluss des Ersatzes eines Teils eines Typs durch ein Teil eines anderen Typs zu bewerten.

9. Verfahren nach Anspruch 8, **dadurch gekennzeichnet, dass** auch dreidimensionale Prüfungen der Geometrie eines Karosseriebauteils (1) vorgenommen werden, das mit zumindest einem Serien-Gelenk (20) oder zumindest einem Referenz-Gelenk (10) auf einem Kraftfahrzeug montiert wird, um Vergleichsmessungen anzustellen.

## Claims

1. Device for the three-dimensional checking of the geometry of a motor vehicle bodywork element (1), designed to be mounted so as to be able to move between open and closed positions by means of at least one articulation piece (10; 20), said device comprising means (4₂) for receiving said bodywork element in a position corresponding to said closed position and means (7ᵢ) for measuring the position then occupied by at least one point on said element (1), said reception means (4₂) comprising means for fixing said articulation piece (10; 20), preassembled with said bodywork element (1), these reception means (4₂) being designed to receive, under the same conditions, either a production articulation piece (20) or a reference articulation piece (10), said device being adapted to a production (20) or reference (10) articulation piece in the form of a hinge comprising a fixed knuckle (12; 12') and a knuckle (13) able to move with said movable bodywork element (1), said reception means (4₂) comprising a support surface (14) conformed so as to receive either a complementary surface of said fixed knuckle (12'; 12) of a production hinge (20) or of a reference hinge (10), conformed as the surface that receives said fixed knuckle (12') on a production vehicle, **characterised in that** said fixing means comprise a fixing member comprising a threaded spindle (15) projecting from said support surface (14) in order to pass into a hole pierced in a lug (16) on said fixed knuckle (12; 12') when the latter is fitted on said reception means with said bodywork element (1) with which it has previously been assembled, said fixing means comprising a nut (17) screwed onto said threaded spindle (15) in order to grip said lug (16) on said support surface (14).

2. Device according to claim 1, **characterised in that** said fixing means comprise a second fixing member (18), the two members being disposed on either side of the spindle (11) of said hinge, said second fixing member (18) passing through a sole plate of said fixed knuckle (12; 12') in order to grip it against said support surface (14).

3. Device according to claim 2, **characterised in that** said second fixing member cooperates with a threaded hole (19) formed in said sole plate of said fixed knuckle (12) of a reference hinge (10).

4. Device according to claim 3, **characterised in that** it comprises a flange (22) able to move between an inactive position and an active position in order to be brought into its inactive position or into its active position when said support surface (14) receives a reference hinge (10) or a production hinge (20) respectively, said flange (22) cooperating with said second fixing member (18) in order to clamp said fixed knuckle (12') of said production hinge (20) against said support surface (14).

5. Use of the device according to any one of the preceding claims for the three dimensional checking of a bodywork element in the group consisting of: an engine compartment bonnet, a motor vehicle passenger compartment door, a tailgate or an opening roof of such a vehicle.

6. Method for using the device according to any one of claims 1 to 4, **characterised by** the following steps:
a) said articulation piece, reference (10) or production (20), is fixed to said bodywork element (1),
b) said element (1) thus equipped is placed on said checking device,
c) said bodywork element (1) is fixed on said means (4₂) for receiving said checking device, and
d) the position of at least one point on said element (1) is measured.

7. Method according to claim 6, **characterised in that** the fixings of said articulation piece (10; 20) on said bodywork element (1) and then on said means (4₂) for receiving said checking device are done under predetermined clamping forces.

8. Method according to either one of claims 6 or 7, **characterised in that** the said measurements are carried out on a bodywork element (1) equipped either with a reference articulation piece (10) or a production articulation piece (20), and the results of the measurements are compared in order to assess the influence of the substitution of a piece of one type for a piece of the other type.

9. Method according to claim 8, **characterised in that** three-dimensional checks on the geometry of a bodywork element (1) mounted on a motor vehicle are also carried out by means of at least one production articulation piece (20) or at least one reference articulation piece (10) in order to establish comparison measurements.
